# EUROPEAN PATENT APPLICATION

(11) **EP 3 747 675 A1**
(43) Date of publication of application: **09.12.2020**
(21) Application number: 19746954.7
(22) Date of filing: 23.01.2019
(51) Int. Cl.: B60C 23/04

(54) **TIRE PRESSURE RECEIVER AND INSTRUCTION PROCESSING METHOD**

(30) Priority: 01.02.2018 CN 201810116329
(71) Applicant: AUTEL INTELLIGENT TECHNOLOGY CORP., LTD., Shenzhen, Guangdong 518055 (CN)
(72) Inventor: LIN, Zhentao, Shenzhen, Guangdong 518055 (CN); QIU, Canxiang, Shenzhen, Guangdong 518055 (CN)
(74) Representative: Gulde & Partner
(86) International application number: PCT/CN2019/072854
(87) International publication number: WO 2019/149124

(57) **Abstract**

The present application relates to a tire pressure receiver, including a main control unit, a tire pressure receiving unit, and a wireless communications unit. The wireless communications unit is configured to receive a first instruction sent by a terminal, and transmit the first instruction to the main control unit; the main control unit is configured to receive the first instruction, and update identity information of a tire pressure sensor according to the first instruction, so that the tire pressure sensor can match the tire pressure receiver; and then, the main control unit may receive, through the tire pressure receiving unit, tire pressure information corresponding to the tire pressure sensor of which the identity information is updated. In this way, a matching process is simplified, and user experience is improved. In addition, an instruction processing method is further provided.

## Description

### CROSS-REFERENCE TO RELATED APPLICATIONS

The present application claims priority to Chinese Patent Application No. 201810116329.2, filed with the Chinese Patent Office on February 1, 2018 and entitled "TIRE PRESSURE RECEIVER AND INSTRUCTION PROCESSING METHOD", which is incorporated herein by reference in its entirety.

### BACKGROUND

### Technical Field

The present application relates to a tire pressure receiver, and especially, to a tire pressure receiver and an instruction processing method.

### Related Art

As tire pressure monitoring system (TPMS) is widely applied at present, a tire pressure sensor is installed in an increasing quantity of vehicles. Because of an influence of a service life of the tire pressure sensor, the quantity of vehicles of which the tire pressure sensor needs to be replaced is increasing. After the tire pressure sensor is replaced, a tire pressure sensor after the replacement needs to match a tire pressure receiver in a vehicle, and only after the matching, the tire pressure receiver can effectively receive tire pressure information sent by the tire pressure sensor after the replacement. Currently, matching can only be performed by using dedicated tools, and a matching process is complicated.

### SUMMARY

Based on this, embodiments of the present application provide a tire pressure receiver and an instruction processing method, which can simplify a matching process and improve user experience.

A tire pressure receiver includes a main control unit, a tire pressure receiving unit, and a wireless communications unit, where
the wireless communications unit is configured to receive a first instruction sent by a terminal, and transmit the first instruction to the main control unit;
the main control unit is configured to receive the first instruction, and update identity information of a tire pressure sensor according to the first instruction; and
the main control unit is further configured to receive, through the tire pressure receiving unit, tire pressure information corresponding to the tire pressure sensor of which the identity information is updated.

In one embodiment, the wireless communications unit is further configured to receive a second instruction of the terminal, and send the second instruction to the main control unit; and
the main control unit is further configured to send, through the wireless communications unit, tire pressure information read according to the second instruction to the terminal.

In one embodiment, a storage unit is included, where
the storage unit is configured to store updated identity information of the tire pressure sensor sent by the main control unit.

In one embodiment, the storage unit is further configured to store tire pressure information, sent by the main control unit, corresponding to the tire pressure sensor of which the identity information is updated.

In one embodiment, a vehicle-mounted device communications unit is further included, where
the vehicle-mounted device communications unit is configured to receive tire pressure information sent by the main control unit, and send the tire pressure information to a vehicle-mounted display device for display.

In one embodiment, the wireless communications unit is further configured to receive a third instruction, and send the third instruction to the main control unit; and
the main control unit is configured to determine to-be-displayed tire pressure information according to the third instruction, and send the to-be-displayed tire pressure information to the vehicle-mounted device communications unit.

In one embodiment, the main control unit is further configured to determine a display mode of the to-be-displayed tire pressure information according to the third instruction, and send, through the vehicle-mounted device communications unit, the display mode to the vehicle-mounted display device, to make the vehicle-mounted display device display the tire pressure information according to the display mode.

In one embodiment, a power supply unit is further included, and the power supply unit is configured to supply power for the main control unit.

In one embodiment, the tire pressure receiving unit includes a radio frequency receiving unit.

In one embodiment, the wireless communications unit includes at least one of a Bluetooth unit, a wireless fidelity (Wi-Fi) unit, and a Zigbee unit.

An instruction processing method is applied to a tire pressure receiver, and includes:
receiving a first instruction sent by a terminal;
updating identity information of a tire pressure sensor according to the first instruction; and
receiving tire pressure information, sent by the tire pressure sensor, corresponding to the tire pressure sensor of which the identity information is updated.

In the embodiments of the present application, the tire pressure receiver includes the main control unit, the tire pressure receiving unit, and the wireless communications unit. The wireless communications unit is configured to receive the first instruction sent by the terminal, and transmit the first instruction to the main control unit; the main control unit is configured to receive the first instruction, and update the identity information of the tire pressure sensor according to the first instruction, so that the tire pressure sensor can match the tire pressure receiver; and then, the main control unit may receive, through the tire pressure receiving unit, the tire pressure information corresponding to the tire pressure sensor of which the identity information is updated. In this way, a matching process is simplified, and user experience is improved.

### BRIEF DESCRIPTION OF THE DRAWINGS

FIG. 1 is a schematic structural diagram of a tire pressure receiver according to an embodiment of the present application;
FIG. 2 is a schematic structural diagram of a tire pressure receiver according to an embodiment of the present application; and
FIG. 3 is a schematic flowchart of an instruction processing method according to an embodiment of the present application.

### DETAILED DESCRIPTION

Embodiments of the present invention are described below with reference to related accompanying drawings.

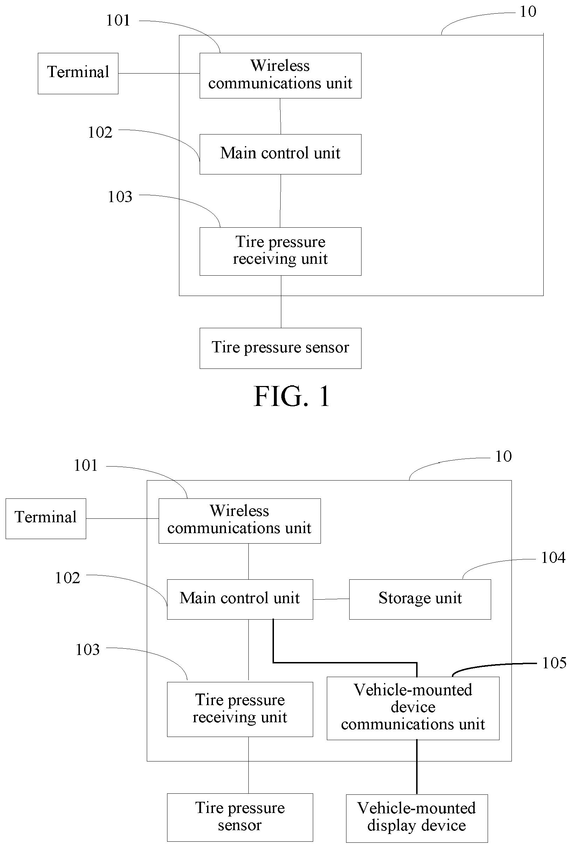

FIG. 1 is a schematic structural diagram of a tire pressure receiver according to an embodiment of the present application.

As shown in FIG. 1, the tire pressure receiver 10 includes a main control unit 102, a tire pressure receiving unit 103, and a wireless communications unit 101.

The wireless communications unit 101 may implement a communication connection with a terminal. Specifically, the wireless communications unit 101 is configured to receive a first instruction sent by a terminal, and transmit the first instruction to the main control unit 102.

The terminal may include a user terminal, for example, a terminal device such as a smartphone or a tablet computer. The wireless communications unit 101 may implement a connection with the terminal based on a wireless communications technology. For example, the wireless communications unit 101 may be a Bluetooth unit, that is, the wireless communications unit 101 implements communication with the terminal based on a Bluetooth technology; or, the wireless communications unit 101 may be a Wi-Fi unit, that is, the wireless communications unit 101 implements communication with the terminal based on a Wi-Fi technology; or, the wireless communications unit may be a Zigbee unit, that is, the wireless communications unit 101 implements communication with the terminal based on a Zigbee technology. Certainly, the wireless communications unit 101 may be further a structure supporting another communications technology or communications protocol, and this is not limited herein.

The wireless communications unit 101 may be implemented by a structure such as an application-specific integrated circuit (ASIC), a field-programmable gate array (FPGA) or another programmable logic device, a discrete gate, a transistor logic device, or a discrete hardware component, and this is not limited herein.

The wireless communications unit 101 may be further configured to receive another instruction sent by the terminal, and may parse the instruction according to the communications protocol, and send the parsed instruction to the main control unit 102, and the main control unit 102 performs further processing on the instruction.

The first instruction sent by the terminal herein may be used for instructing the main control unit 102 to update identity information of a tire pressure sensor.

The main control unit 102 is configured to receive the first instruction, and update the identity information of the tire pressure sensor according to the first instruction.

Exemplarily, the identity information of the tire pressure sensor may include one or more of an identifier of the tire pressure sensor, installation location information of the tire pressure sensor, and the like. This is not limited herein. The identifier of the tire pressure sensor may be a unique identifier used for representing a tire pressure sensor, or may be a writable identifier of a tire pressure sensor, and this is not limited herein. For example, the installation location information of the tire pressure sensor may be used for indicating that the tire pressure sensor is installed at a left front tire, a right front tire, a left rear tire, or a right rear tire of a vehicle. The updating, by the main control unit 102, the identity information of the tire pressure sensor may be updating one or more pieces of information in the identity information, and this is not limited herein.

In one scenario, if a tire pressure sensor on a vehicle needs to be replaced, the terminal may receive identity information, input by a user, of a tire pressure sensor after the replacement, for example, an identifier of a tire pressure sensor, and the identity information after the replacement is carried in the first instruction and sent to the wireless communications unit 101.

In an implementation, the wireless communications unit 101 may parse the first instruction to find that the instruction is used for updating the identity information of the tire pressure sensor, and parse out the identity information after replacement, and the wireless communications unit 101 may parse the identity information after replacement. The wireless communications unit 101 sends the parsed information to the main control unit 102.

In another implementation, the wireless communications unit 101 may send the first instruction to the main control unit 102. The main control unit 102 parses the first instruction and executes the first instruction.

For example, the first instruction may be used for instructing to update an identifier of the tire pressure sensor of which the installation location is at the left front tire, and the first instruction may carry information that the installation location information of the tire pressure sensor is the left front tire, an identifier of a new tire pressure sensor, and the like. The wireless communications unit 101 may receive the first instruction sent by the terminal and send the first instruction to the main control unit 102. Then the main control unit 102 may determine, according to the installation location information, the tire pressure sensor of which the identifier is to be updated, and update the identifier of the tire pressure sensor to an identifier carried in the first instruction. Specifically, a correspondence table between identifiers and installation location information of tire pressure sensors may be pre-established, and an identifier of a tire pressure sensor is updated according to the correspondence table.

The main control unit 102 is further configured to receive, through the tire pressure receiving unit 103, tire pressure information corresponding to the tire pressure sensor of which the identity information is updated.

Exemplarily, after updating the identity information of the tire pressure sensor according to the first instruction, the main control unit 102 may receive, through the tire pressure receiving unit 103, tire pressure information sent by the tire pressure sensor, and the tire pressure information may include tire temperature, tire pressure, or other environment information collected by the tire pressure sensor. The tire pressure information may further carry the identity information of the tire pressure sensor, for example, the identifier of the tire pressure sensor.

The main control unit 102 may match the identifier of the tire pressure sensor carried in the tire pressure information and updated identity information of a tire pressure sensor. If the identifier of the tire pressure sensor carried in the tire pressure information successfully matches updated identity information of one tire pressure sensor, the main control unit 102 may determine corresponding installation location information of the tire pressure sensor based on the identifier of the tire pressure sensor, and then know a state of a corresponding tire according to the received tire pressure information.

For example, the main control unit 102 matches the identifier of the tire pressure sensor and the pre-established correspondence table sequentially. If the identifier successfully matches an identifier in the correspondence table, the installation location information of the tire pressure sensor may be determined. For example, if the tire pressure sensor is installed at the left front tire, the main control unit 102 may know that the received tire pressure information belongs to the left front tire, and then determine a current state of the left front tire according to the tire pressure information.

The tire pressure receiving unit 103 may receive the information about the tire pressure sensor by using a one-way transmission technology.

The main control unit 102 may be implemented by a processor, a controller, a central processing unit (CPU), an ASIC, an FPGA or another programmable logic device, a discrete gate, a transistor logic device, or a discrete hardware component, and this is not limited herein.

In the foregoing tire pressure receiver, a user may update the identity information, in the tire pressure receiver, of the tire pressure sensor by using a terminal, which simplifies a matching process between the tire pressure receiver and the tire pressure sensor and improves user experience.

FIG. 2 is a schematic structural diagram of another tire pressure receiver according to an embodiment of the present application.

As shown in FIG. 2, the tire pressure receiver 10 includes a main control unit 102, a tire pressure receiving unit 103, a wireless communications unit 101, a storage unit 104, and a vehicle-mounted device communications unit 105.

Functions and principles of the main control unit 102, the tire pressure receiving unit 103, and the wireless communications unit 101 are the same as those in FIG. 1, and details are not repeated herein.

The storage unit 104 is configured to store updated identity information of a tire pressure sensor sent by the main control unit 102.

Specifically, the storage unit 104 may store the updated identity information of the tire pressure sensor sent by the main control unit 102. Therefore, when receiving tire pressure information of one tire pressure sensor through the tire pressure receiving unit 103, the main control unit 102 may invoke the identity information stored in the storage unit 104, and determine whether identity information of the tire pressure sensor carried in the tire pressure information matches the identity information stored in the storage unit 104; and may identify, if matching, a tire to which the tire pressure sensor belongs, and then determine a state of the tire according to the received tire pressure information.

The storage unit 104 is further configured to store tire pressure information, sent by the main control unit 102, corresponding to the tire pressure sensor of which the identity information is updated.

Specifically, the main control unit 102 may first determine, according to the tire pressure information sent by the tire pressure receiving unit 103, whether the identity information in the tire pressure information matches the identity information stored in the storage unit 104. If matching, the main control unit 103 stores the tire pressure information in the storage unit 104. Further, the main control unit 103 may further read the stored tire pressure information from the storage unit 104 and perform further processing. For example, whether a tire goes wrong may be determined according to the tire pressure information.

When new tire pressure information needs to be written into the storage unit 104, the storage unit 104 may write the new tire pressure information onto an address of the original tire pressure information, to overwrite the original tire pressure information, thereby saving storage space. Alternatively, the storage unit 104 may store both the new tire pressure information and the original tire pressure information. A storage manner of the storage unit 104 for the tire pressure information may be correlated to hardware implementation of the storage unit 104, and this is not limited herein.

Specifically, in a digital system, anything that can store binary data may be a storage unit 104; in an integrated circuit, a circuit having a storage function without a physical form such as a volatile random access memory (RAM) or a first input first output (FIFO) memory may also be called a storage unit 104; and in a system, a storage device having a physical form such as a memory module or a memory card may also be called a storage unit 104.

The tire pressure receiver 10 may further include a vehicle-mounted communications unit 105. The vehicle-mounted device communications unit 105 is configured to receive the tire pressure information sent by the main control unit 102, and send the tire pressure information to a vehicle-mounted display device, so that the tire pressure information is displayed in the vehicle-mounted display device. Specifically, the vehicle-mounted display device may exchange data with the tire pressure receiver 10 through the vehicle-mounted device communications unit 105. The vehicle-mounted communications unit 105 may be implemented by a field bus interface (FBI), an RS232 interface, or a serial interface. Certainly, the vehicle-mounted communications unit 105 may further include another implementation. For example, the vehicle-mounted communications unit 105 is a wireless interface. The vehicle-mounted communications unit 105 may implement a wired connection or a wireless connection with the vehicle-mounted display device, and this is not limited herein.

Optionally, the tire pressure receiver 10 may include a display unit, and the main control unit 101 is configured to control the display unit to display the tire pressure information, or display a processing result of the main control unit 101 for the tire pressure information. In this case, the tire pressure receiver 10 does not need to perform display through the vehicle-mounted display device, thereby improving user experience.

With reference to a structure of the foregoing tire pressure receiver, in this embodiment, the wireless communications unit 101 is further configured to receive a second instruction of the terminal and send the second instruction to the main control unit 102.

The second instruction is used for controlling the main control unit 102 to read the tire pressure information. When a user needs to know tire pressure information of a left front tire, since data of the tire pressure sensor is updated regularly or in real time, and updated tire pressure information is continuously sent to the tire pressure receiver 10, the tire pressure information of the left front tire can be read by controlling the main control unit 102 through the terminal. After the tire pressure information is successfully read, the tire pressure information may be sent to the terminal through the wireless communications unit 101.

In an implementation, the wireless communications unit 101 may parse the second instruction to find that the instruction is used for reading the tire pressure information obtained by the tire pressure sensor, and the wireless communications unit 101 may parse the instruction. The wireless communications unit 101 sends the parsed information to the main control unit 102. The main control unit 102 obtains, according to the information, information received by the tire pressure receiving unit 103. The tire pressure receiving unit 103 receives the data of the tire pressure sensor regularly, irregularly, or in real time. The data includes the tire pressure information, and therefore, according to the second instruction, the main control unit 102 obtains, through the tire pressure receiving unit 103, data sent by the tire pressure sensor regularly, irregularly, or in real time, and then obtains regular, irregular, or real-time tire pressure information.

In another implementation, the wireless communications unit 101 may send the second instruction to the main control unit 102. The main control unit 102 parses the second instruction and executes the second instruction.

For example, the second instruction may be used for obtaining the tire pressure information of the tire pressure sensor of which the installation location is at the left front tire. The wireless communications unit 101 may receive the second instruction sent by the terminal and send the second instruction to the main control unit 102. The main control unit 102 may determine, according to the second instruction, that the tire of which the tire pressure information needs to be obtained is the left front tire. Therefore, the main control unit 102 reads the tire pressure information of the left front tire from the storage unit 104.

The main control unit 102 is further configured to send the tire pressure information read according to the second instruction to the terminal through the wireless communications unit 101.

Exemplarily, after reading the tire pressure information according to the second instruction, the main control unit 102 may obtain data of each tire pressure sensor according to the tire pressure information stored in the storage unit 104, and the data may include real-time tire pressure information, or may be tire pressure information at a specific time point. Therefore, reading may be performed according to the tire pressure information required by the user, and the tire pressure information is sent to the terminal in a form of the second instruction through the wireless communications unit 101.

For example, when the main control unit 102 finds, through parsing, that the second instruction is to read the tire pressure information of the left front tire, the main control unit 102 reads the tire pressure information of the left front tire from the storage unit 104, and the information may be real-time tire pressure information, or may be tire pressure information at a specific time point. The main control unit 102 sends the read tire pressure information of the left front tire to the terminal through the wireless communications unit 101.

Alternatively, the second instruction may indicate information about a tire to which to-be-read tire pressure information belongs, the quantity of to-be-read tire pressure information, the time of to-be-read tire pressure information, and the like. The main control unit 102 may read out the tire pressure information indicated by the second instruction from the storage unit 104 according to the second instruction, and sends the tire pressure information to the terminal through the wireless communications unit 102, so that the terminal may obtain the required tire pressure information.

The wireless communications unit 101 is further configured to receive a third instruction, and send the third instruction to the main control unit 102.

The main control unit 102 is configured to determine to-be-displayed tire pressure information according to the third instruction, and send the to-be-displayed tire pressure information to the vehicle-mounted device communications unit 105. The vehicle-mounted device communications unit 105 sends the to-be-displayed tire pressure information to the vehicle-mounted display device for display.

The main control unit 102 is further configured to determine a display mode of the to-be-displayed tire pressure information according to the third instruction, and send the display mode to the vehicle-mounted display device through the vehicle-mounted device communications unit 105, to make the vehicle-mounted display device display the tire pressure information according to the display mode.

Specifically, the display mode is light flashing or numeric display, and the display mode of the tire pressure information is not limited herein. That is, the third instruction may be further used for indicating another display mode, and this is not limited herein.

The third instruction is used for controlling the main control unit 102 to determine the to-be-displayed tire pressure information. When the user needs to know the tire pressure information of the left front tire, the terminal may generate the third instruction, and send the third instruction to the wireless communications unit 103 of the tire pressure receiver 10. Therefore, the main control unit 102 receives the read tire pressure information of the left front tire through the wireless communications unit 103. After the tire pressure information is successfully read, the tire pressure information may be sent to the vehicle-mounted display device through the vehicle-mounted device communications unit 105 and displayed.

In an implementation, the wireless communications unit 101 may parse the third instruction to find that the instruction is used for determining the to-be-displayed tire pressure information, and the wireless communications unit 101 may parse the instruction. The wireless communications unit 101 sends the parsed information to the main control unit 102. The main control unit 102 obtains, according to the information, the tire pressure information stored in the storage unit 104. Therefore, according to the third instruction, the main control unit 101 may obtain, through the tire pressure receiving unit 103, the data sent by the tire pressure sensor regularly or in real time, and then obtain the to-be-displayed regular or real-time tire pressure information.

In another implementation, the wireless communications unit 101 may send the third instruction to the main control unit 102. The main control unit 102 parses the third instruction and executes the third instruction.

For example, the third instruction may be used for obtaining the tire pressure information of the tire pressure sensor of which the installation location is at the left front tire. The wireless communications unit 101 may receive the third instruction sent by the terminal and send the third instruction to the main control unit 102. The main control unit 102 may determine the to-be-displayed tire pressure information according to the third instruction, and correspondingly, the tire pressure information is the tire pressure information of the left front tire. Therefore, the main control unit 102 reads the tire pressure information of the left front tire from the storage unit 104 and determines the information as the to-be-displayed tire pressure information.

Exemplarily, after determining the to-be-displayed tire pressure information according to the third instruction, the main control unit 102 may obtain data of each tire pressure sensor according to the tire pressure information stored in the storage unit 104, and the data may include real-time tire pressure information, or may be tire pressure information at a specific time point. Therefore, reading may be performed according to the to-be-displayed tire pressure information required by the user, and the tire pressure information is sent to the vehicle-mounted display device through the vehicle-mounted device communications unit 105.

For example, when the main control unit 102 finds, through parsing, that the third instruction is to display the tire pressure information of the left front tire, the main control unit 102 reads the tire pressure information of the left front tire from the storage unit 104, and the information may be real-time tire pressure information, or may be tire pressure information at a specific time point. The main control unit 102 sends the read tire pressure information of the left front tire to the vehicle-mounted display device through the vehicle-mounted device communications unit 105, and the tire pressure information is displayed by the vehicle-mounted display device.

The tire pressure receiver 10 further includes a power supply unit configured to supply power for the main control unit 102. Certainly, the power supply unit may also supply power for another unit in the tire pressure receiver 10, and this is not limited herein. The tire pressure receiver 10 implements independent work through the power supply unit.

Optionally, the tire pressure receiver 10 may further include a power supply interface, and the power supply interface may be connected to a vehicle-mounted device, so that the vehicle-mounted device supplies power for the tire pressure receiver 10.

The tire pressure receiver 10 may be compatible with the foregoing power supply manner. That is, the tire pressure receiver 10 includes the power supply unit and the power supply interface. If the main control unit 102 detects that the power supplied by the power supply unit is insufficient, the main control unit is switched to the power supply interface, and the vehicle-mounted device supplies power for the main control unit. Alternatively, the tire pressure receiver 10 may implement power supply in any of the foregoing manners, and this is not limited herein.

The tire pressure receiving unit 103 includes a radio frequency receiving unit.

The wireless communications unit 101 includes at least one of a Bluetooth unit, a wireless fidelity (Wi-Fi) unit, and a Zigbee unit. The wireless communications unit 101 communicates with the terminal, and therefore, various communications protocols in the terminal may be adopted, which include but are not limited to one of the Bluetooth unit, the Wi-Fi unit, and the Zigbee unit.

Based on the foregoing embodiment, a working principle of the tire pressure receiver 10 is as follows:
After the user replaces the tire pressure sensor, the terminal sends the first instruction to the wireless communications unit 101, and the first instruction includes the identity information of the tire pressure sensor, so that after receiving the first instruction through the wireless communications unit 101, the main control unit 102 updates the identity information of the tire pressure sensor. Moreover, since the tire pressure sensor after the replacement sends the tire pressure information to the tire pressure receiver 10 regularly, irregularly, or in real time, the tire pressure receiver 10 sends the received tire pressure information to the main control unit 102, the main control unit 102 further determines the tire pressure information currently transmitted by the tire pressure sensor, and the storage unit 104 stores the tire pressure information.

Further, after the terminal sends the second instruction, the main control unit 102 may send the currently received tire pressure information to the terminal, so that the terminal displays the tire pressure information.

After the terminal sends the third instruction, the main control unit 102 may determine the to-be-displayed tire pressure information according to the third instruction, and send the to-be-displayed tire pressure information to the vehicle-mounted device communications unit. Therefore, the user can obtain the tire pressure information through the display of the vehicle-mounted device, which makes it convenient for the user to view the current tire pressure information during driving.

The tire pressure receiver 10 is configured to perform operations such as tire pressure reading and matching on a target vehicle, and the tire pressure receiver includes the main control unit 102, the tire pressure receiving unit 103, and the wireless communications unit 101. The wireless communications unit 101 is configured to receive the first instruction sent by the terminal, and transmit the first instruction to the main control unit 102; the main control unit 102 is configured to receive the first instruction, and update the identity information of the tire pressure sensor according to the first instruction, so that the tire pressure sensor can match the tire pressure receiver 10; and then, the main control unit 102 may receive, through the tire pressure receiving unit 103, the tire pressure information corresponding to the tire pressure sensor of which the identity information is updated. In this way, a matching process is simplified, and user experience is improved.

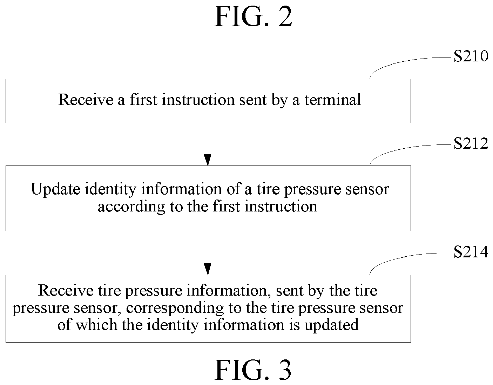

FIG. 3 is a flowchart of an instruction processing method.

The instruction processing method is applied to a tire pressure receiver, and includes the following steps:
Step S210: Receive a first instruction sent by a terminal.
Step S212: Update identity information of a tire pressure sensor according to the first instruction.
Step S214: Receive tire pressure information, sent by the tire pressure sensor, corresponding to the tire pressure sensor of which the identity information is updated.

In the foregoing instruction processing method, by receiving the first instruction sent by the terminal; updating the identity information of the tire pressure sensor according to the first instruction; and receiving the tire pressure information, sent by the tire pressure sensor, corresponding to the tire pressure sensor of which the identity information is updated, the tire pressure sensor can match the tire pressure receiver; and then, the tire pressure information corresponding to the tire pressure sensor of which the identity information is updated may be received. In this way, a matching process is simplified, and user experience is improved.

The tire pressure receiver may further implement any of the methods in the foregoing embodiments by using a unit structure of the tire pressure receiver, and details are not repeated herein.

Various technical features in the foregoing embodiments may be combined randomly. For ease of description, all possible combinations of the various technical features in the foregoing embodiments are not described. However, the combinations of the technical features should be considered as falling within the scope recorded in this specification provided that the combinations of the technical features are compatible with each other.

The foregoing embodiments only describe several implementations of the present invention, and their description is specific and detailed, but cannot therefore be understood as a limitation on the patent scope of the present invention. It should be noted that a person of ordinary skill in the art may make various variations and improvements without departing from the concept of the present invention, and these variations and improvements shall belong to the protection scope of the present invention. Therefore, the protection scope of the patent of the present invention should be subject to the appended claims.

## Claims

1. A tire pressure receiver, comprising a main control unit, a tire pressure receiving unit, and a wireless communications unit, wherein
the wireless communications unit is configured to receive a first instruction sent by a terminal, and transmit the first instruction to the main control unit;
the main control unit is configured to receive the first instruction, and update identity information of a tire pressure sensor according to the first instruction; and
the main control unit is further configured to receive, through the tire pressure receiving unit, tire pressure information corresponding to the tire pressure sensor of which the identity information is updated.

2. The tire pressure receiver according to claim 1, wherein
the wireless communications unit is further configured to receive a second instruction of the terminal, and send the second instruction to the main control unit; and
the main control unit is further configured to send, through the wireless communications unit, tire pressure information read according to the second instruction to the terminal.

3. The tire pressure receiver according to claim 1, comprising a storage unit, wherein
the storage unit is configured to store updated identity information of the tire pressure sensor sent by the main control unit.

4. The tire pressure receiver according to claim 3, wherein the storage unit is further configured to store tire pressure information, sent by the main control unit, corresponding to the tire pressure sensor of which the identity information is updated.

5. The tire pressure receiver according to claim 1, further comprising a vehicle-mounted device communications unit, wherein
the vehicle-mounted device communications unit is configured to receive tire pressure information sent by the main control unit, and send the tire pressure information to a vehicle-mounted display device for display.

6. The tire pressure receiver according to claim 5, wherein
the wireless communications unit is further configured to receive a third instruction, and send the third instruction to the main control unit; and
the main control unit is configured to determine to-be-displayed tire pressure information according to the third instruction, and send the to-be-displayed tire pressure information to the vehicle-mounted device communications unit.

7. The tire pressure receiver according to claim 6, wherein
the main control unit is further configured to determine a display mode of the to-be-displayed tire pressure information according to the third instruction, and send, through the vehicle-mounted device communications unit, the display mode to the vehicle-mounted display device, to make the vehicle-mounted display device display the tire pressure information according to the display mode.

8. The tire pressure receiver according to any of claims 1 to 7, further comprising a power supply unit, the power supply unit being configured to supply power for the main control unit.

9. The tire pressure receiver according to claim 1, wherein the tire pressure receiving unit comprises a radio frequency receiving unit.

10. The tire pressure receiver according to claim 1, wherein the wireless communications unit comprises at least one of a Bluetooth unit, a wireless fidelity (Wi-Fi) unit, and a Zigbee unit.

11. An instruction processing method, applied to a tire pressure receiver, and comprising:
receiving a first instruction sent by a terminal;
updating identity information of a tire pressure sensor according to the first instruction; and
receiving tire pressure information, sent by the tire pressure sensor, corresponding to the tire pressure sensor of which the identity information is updated.
